# EUROPEAN PATENT SPECIFICATION

(11) **EP 2 509 255 B1**
(45) Date of publication and mention of the grant of the patent: **02.08.2017**
(21) Application number: 11746847.0
(22) Date of filing: 24.02.2011
(51) Int. Cl.: H04L 12/14, H04M 15/00

(54) **SERVICE PROCESSING METHOD AND APPARATUS**
DIENSTVERARBEITUNGSVERFAHREN UND -VORRICHTUNG
PROCÉDÉ ET DISPOSITIF POUR LA GESTION DE SERVICES

(30) Priority: 24.02.2010 CN 201010113262
(43) Date of publication of application: 10.10.2012
(73) Proprietor: Huawei Technologies Co., Ltd., Longgang District Shenzhen, Guangdong 518129 (CN)
(72) Inventor: JIANG, Zhenyu, Guangdong Province 518129 (CN)
(74) Representative: Pfenning, Meinig & Partner mbB
(86) International application number: PCT/CN2011/071219
(87) International publication number: WO 2011/103805

(56) References cited:
- EP-A1- 1 876 843
- WO-A1-2007/095864
- WO-A1-2009/134267
- CN-A- 1 794 638
- CN-A- 1 983 938
- CN-A- 101 267 321
- CN-A- 101 488 864
- "3rd Generation Partnership Project; Technical Specification Group Services and System Aspects; Telecommunication management; Charging management; Charging architecture and principles (Release 9)", 3GPP STANDARD; 3GPP TS 32.240, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V9.0.0, 30 December 2009 (2009-12-30), pages 1-44, XP050401639, [retrieved on 2009-12-30]

## Description

### Field of the Invention

The present invention relates to the technical field of network communication, and more particularly to a service processing method and a service processing apparatus.

### Background of the Invention

With the vigorous development of mobile data services, great quantities of user services lead to overload of the online charging system (OCS). In the prior art, when overload occurs in the OCS, service access requests of subsequent users are directly denied, and an external system (such systems as service control point, mobile data service platform, gateway GPRS support node, etc.) is enabled to decide whether to perform offline charging.

The prior art has the following disadvantages: the processing of user service access requests in case of overload of the OCS is too simple, i.e. user service access requests are directly denied, and this cannot satisfy the requirements of different services and different users, thus limiting the service processing capability of the OCS.

EP 1876843 A1 discloses a method of ensuring call processing for an intelligent user, including: judging, by a Service Switching Point (SSP), whether traffic between the SSP and a Service Control Point (SCP) is abnormal; if the traffic is abnormal, turning off, by the SSP, intelligent triggers located in itself, which are related to the call, and performing an ordinary call connection; otherwise, performing an intelligent call connection, and terminating the process.

3rd Generation Partnership Project; Technical Specification Group Services and System Aspects; Tele communication management; Charging management; Charging architecture and principles (Release 9), 3GPP STANDARD; 3GPP TS 32.240 discloses that GSM/UMTS/EPC networks provide functions that implement offline and/or online charging mechanisms on the bearer (e.g. EPC), subsystem (e.g. IMS) and service (e.g. MMS) levels. In order to support these charging mechanisms, the network performs real-time monitoring of resource usage on the above three levels in order to detect the relevant chargeable events. In offline charging, the resource usage is reported from the network to the Billing Domain after the resource usage has occurred. In online charging, a subscriber account, located in an online charging system, is queried prior to granting permission to use the requested network resource(s).

### Summary of the Invention

Embodiments of the present invention provide a method, an apparatus and a system for service processing to enhance the service processing capability of the OCS without dependence upon any external system.

To achieve the above objective, embodiments of the present invention employ the following technical solutions.

A service processing method applied in an online charging system comprises: obtaining a user service request; determining that the online charging system is overloaded, parsing the user service request, and obtaining a user attribute and a service attribute corresponding to the user service request, wherein the user attribute and the service attribute are preset; querying a charging processing mode corresponding to the user attribute and the service attribute; and determining the charging processing mode as offline charging, and performing an offline charging by the online charging system for the user service request. A service processing apparatus configured to be applied in an online charging system comprises: an obtaining unit, configured to obtain a user service request; a unit configured to determine whether the online charging system is overloaded or not; a parsing unit, configured to parse the user service request obtained by the obtaining unit when the online charging system is overloaded, and obtain a user attribute and a service attribute corresponding to the user service request, wherein the user attribute and the service attribute are preset; a querying unit, configured to query a charging processing mode corresponding to the user attribute and the service attribute obtained by the parsing unit; and an offline charging unit, configured to perform the offline charging via the online charging system for user service when the charging processing mode obtained by the querying unit is offline charging.

The service processing method and apparatus provided by the embodiments of the present invention enable the online charging system (OCS) to process different user service requests by different charging processing modes according to corresponding user attributes and service attributes, and the online charging system (OCS) is capable of charging user services offline, to
thereby enhance the service processing capability of the OCS. At the same time, since the aforementioned method is completed individually by the OCS without dependence upon any external system, operation is made convenient and resource occupancy of the external system is reduced. According to the service processing method and apparatus provided by the embodiments of the present invention, the service processing capability of the OCS is enhanced without dependence upon any external system.

### Brief Description of the Drawings

To make clearer the explanation of technical solutions of the embodiments of the present invention or of the prior art, accompanying drawings needed in the description of the embodiments or the prior art are briefly illustrated below. Apparently, the accompanying drawings illustrated below are directed to some embodiments of the present invention, and it is possible for persons ordinarily skilled in the art to deduce other drawings from these drawings without creative effort.
Fig. 1 is a flowchart illustrating the service processing method provided by an embodiment of the present invention.
Fig. 2 is a flowchart illustrating the service processing method provided by another embodiment of the present invention;
Fig. 3 is the first diagram exemplarily illustrating the structure of the service processing apparatus provided by an embodiment of the present invention;
Fig. 4 is a diagram exemplarily illustrating the structure of the offline charging unit 304 shown in Fig. 3;
Fig. 5 is a diagram exemplarily illustrating the structure of the generating unit 3041 shown in Fig. 4;
Fig. 6 is the second diagram exemplarily illustrating the structure of the service processing apparatus provided by an embodiment of the present invention; and
Fig. 7 is a diagram exemplarily illustrating the structure of interaction between the service processing apparatus and an external system provided by an embodiment of the present invention.

### Detailed Description of the Preferred Embodiments

To make clearer the objective, technical solutions and advantages of the embodiments of the present invention, the technical solutions according to the embodiments of the present invention are clearly and completely described below with reference to the accompanying drawings. Apparently, the embodiments described below are merely partial, rather than entire, embodiments of the present invention. On the basis of the embodiments of the present invention, all other embodiments obtainable by persons ordinarily skilled in the art without creative effort shall all fall within the protection scope of the present invention.

With the ever deeper competition of the telecommunications market, telecommunication operators subdivide service qualities according to a service and a user - especially when overload occurs in the OCS or it is during peak hours, it is preferential to guarantee important the service and the use of important the user. For instance, when a user of high credit level uses such high-value services as international calls, online charging should be guaranteed; when a user of high credit level uses such low-value services as short messages, offline charging should be employed; the dialing of international calls by the user of low credit level should be directly denied. However, the OCS in the prior art does not possess such service processing capability, and has to depend upon external systems. In order to solve the above problems, embodiments of the present invention provide a method, an apparatus and a system for service processing.

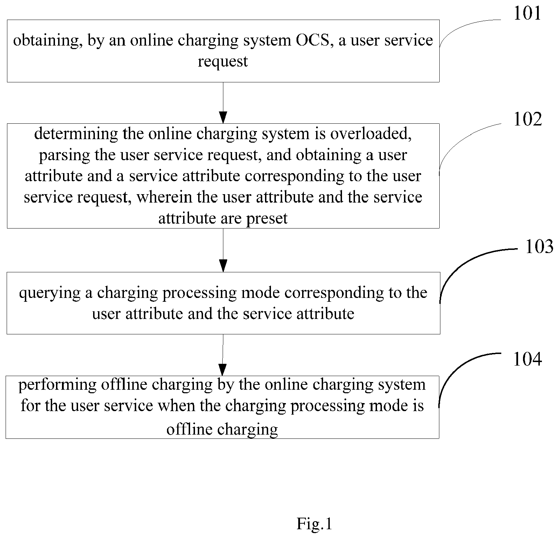

As shown in Fig. 1, a service processing method provided by an embodiment of the present invention is applied in an online charging system (OCS), and includes the following steps.

Step 101: obtaining, by an online charging system (OCS), a user service request.

Step 102: determining the online charging system is overloaded, parsing the user service request, and obtaining a user attribute and a service attribute corresponding to the user service request, wherein the user attribute and the service attribute are preset.

In the embodiments of the present invention, an operator classifies a user and a service according to front-end interfaces. For instance, a user may be classified as high credit level (or low risk level) user, low credit level (or high risk level) user or a medium credit level user, and a service may be classified as high-value (service of dialing an international call, for example) service, low-value (service of short message, for example) service or a medium-value service. Once a user service request is received, the user attribute and service attribute corresponding to the request are parsed, so as to perform different service processing according to practical circumstance of the request.

Step 103: querying a charging processing mode corresponding to the user attribute and the service attribute.

In the embodiments of the present invention, the charging processing mode corresponding to the user attribute and the service attribute is queried according to a preset list of charging processing modes. The list of charging processing modes can be flexibly configured by the operator. For instance, the charging processing mode whereby a user of high credit level requests for a high-value service is configured as online charging, and the charging processing mode whereby a user of high credit level requests for a low-value service is configured as offline charging, and so on.

Step 104: performing offline charging by the online charging system for the user service when the charging processing mode is offline charging.

The service processing method provided by the embodiment of the present invention enables the online charging system (OCS) to process different user service requests by different charging processing modes according to corresponding user attributes and service attributes, and the online charging system (OCS) is capable of charging user services offline, to thereby enhance the service processing capability of the OCS. At the same time, since the aforementioned method is completed individually by the OCS without dependence upon any external system, operation is made convenient and resource occupancy of the external system is reduced. According to the service processing method provided by the embodiment of the present invention, the service processing capability of the OCS is enhanced without dependence upon any external system.

In order that persons skilled in the art can comprehend the technical solutions provided by the embodiments of the present invention in a clearer manner, a service processing method provided by another embodiment of the present invention is described in greater detail below through a specific embodiment.

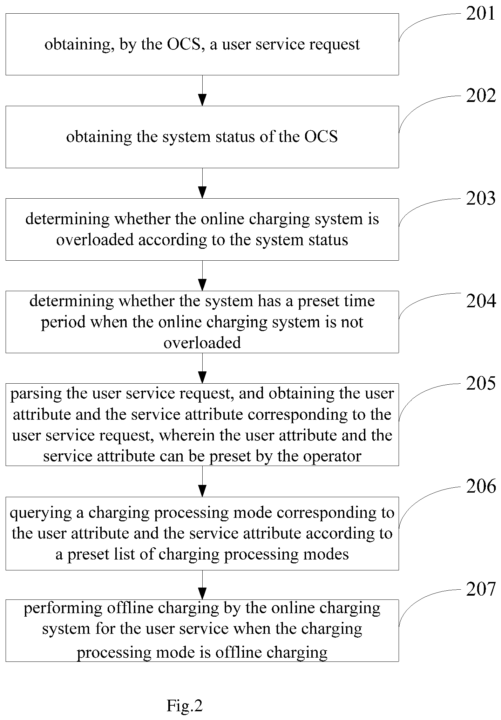

As shown in Fig. 2, a service processing method provided by another embodiment of the present invention is applied in an online charging system, and includes the following steps.

Step 201: obtaining, by the OCS, a user service request.

In the embodiment of the present invention, the user service request is sent to the OCS by an external system connected to the OCS, and the external system may be such a system as a service control point, a mobile data service platform, or a gateway GPRS support node, etc.

Step 202: obtaining the system status of the OCS.

In the embodiment of the present invention, there may be many types of parameters to indicate the system status of the OCS. For instance, the average delay for the OCS to process each user service request, or the current CPU occupancy of the OCS, or the total number of user service requests currently processed by the OCS may be used as the parameter to indicate the system status.

Step 203: determining whether the OCS is overloaded according to the system status.

In the embodiment of the present invention, the system status parameter obtained in Step 202 is used to determine whether the status of the OCS is overloaded. For instance, a threshold of an average delay for processing a service is preset - when an average delay for the OCS to process the user service request exceeds the threshold, it is indicated that the status of the OCS is overloaded, and otherwise the status of the OCS is not overloaded. Alternatively, a threshold of the CPU occupancy of the OCS is preset, - when the current CPU occupancy of the OCS exceeds the threshold, it is indicated that the OCS is overloaded, and otherwise not overloaded. Methods of using other parameters to determine whether the OCS is overloaded are identical with the aforementioned methods, and are hence not repeated here. When the OCS is overloaded, the obtained user service is differently treated, namely by carrying out Steps 205-208. As should be noted, it is possible to provide the OCS with a dedicated load monitoring module to complete the process of determining the system status of Steps 202 and 203, the load monitoring module may be deployed in an online charging unit or an offline charging unit, and the OCS carries out the subsequent steps according to the result obtained by this module.

Step 204: determining whether the system has a preset time period when the online charging system is not overloaded.

In the embodiment of the present invention, the operator sets specified time periods to perform different processing on different users and services according to the front-end interface of a configuring module provided by the OCS. Therefore, it is not necessary that users and services are differentiated only when the OCS is overloaded. For instance, during service peaks at some holidays, or during other time periods when it is necessary to differentiate users and services, it is possible for the operator to make flexible configurations according to the configuring module. In this embodiment, when the OCS is not overloaded and the system has a preset time period, it is further needed to determine whether the time at which the user service request is currently received is within the time period set by the operator or not. If yes, the user service request is parsed, and the user attribute and the service attribute corresponding to the user service request are obtained, wherein the user attribute and the service attribute are preset; a charging processing mode corresponding to the user attribute and service attribute is queried according to a preset list of charging processing modes, thus different users and different services are differently treated, and different charging processing is performed. If said time is not within the time period set by the operator, the user service is directly charged online. Of course, the operator may as well not set any specified time period, and instead differentiate users and services only when the OCS is overloaded. Alternatively, the operator may configure a status of the OCS differentiating users and services at any time. The specific implementation depends upon the practical circumstance, and is not redundantly described here.

When the online charging system is overloaded, corresponding charging processing processes differ according to difference in user services, namely carrying out the processes of Steps 205-208.

Step 205: parsing the user service request, and obtaining the user attribute and the service attribute corresponding to the user service request, wherein the user attribute and the service attribute can be preset by the operator.

In the embodiment of the present invention, the operator classifies users and services according to the front-end interface of a configuring module provided by the OCS, namely to set the user attribute and the service attribute. For instance, a user may be classified as high credit level (or low risk level) user, low credit level (or high risk level) user or a medium credit level user. The credit level of user may be classified with reference to payment situation of the user, frequencies of mobile services used by the user and number of years for which the user uses mobile services. At the same time, a service may be classified as a high-value (service of dialing an international call, for example) service, a low-value (service of short message, for example) service and a medium-value service. The levels of service value can be determined according to the charge of services, and can also be flexibly determined by the operator according to other value factors. When the status of the OCS is overloaded, or once a user service request is received within a specified time period, the user attribute and the service attribute corresponding to the request are parsed, such that different service processing is performed according to practical circumstance of the request.

Step 206: querying a charging processing mode corresponding to the user attribute and the service attribute according to a preset list of charging processing modes.

In the embodiment of the present invention, the list of charging processing modes is also flexibly configured by the operator. The charging processing modes include online charging, offline charging, and denying the user service request. The list of charging processing modes may include three parameters as the user attribute, the service attribute and the charging processing mode. For instance, the charging processing mode corresponding to a user service request with the user attribute as high credit level and the service attribute as high-value can be set as online charging, the charging processing mode corresponding to a user service request with the user attribute as high credit level and the service attribute as low-value can be set as offline charging, and the charging processing mode corresponding to a user service request with the user attribute as low credit level and the service attribute as high-value can be set as direct denial.

Step 207: processing the user service request according to the charging processing mode.

In the embodiment of the present invention, there are three modes of processing the user service request: online charging, offline charging, and direct denial. The user service request is correspondingly processed according to the charging processing mode queried in Step 206. Specific processes of the three modes are as follows.

When online charging is performed for a user service request, an online charging unit is initiated to obtain the charge of the service in real time, and perform rating and accounting.

When a user service request is directly denied, the user service request is not accessed, and a denial message is directly returned.

When offline charging is performed for a user service request (taking the user service as an ordinary voice call for example), an offline charging unit is firstly initiated, a calling detailed record (CDR) of the user is generated, and the CDR is stored; secondly, a message of successful processing of the user service is returned to an external system, and different service requests correspond to different returned messages. For instance, if the service request is Requested-Service-Unit, e.g. request for a call duration of 5 minutes, the service processing system returns to the external system an authorization of the call duration of 5 minutes; if the service request is to report Used-Service-Unit to the service processing system, by reporting that the user has already called for 5 minutes for example, the service processing system returns a message indicating successful fee deduction to the external system; when the OCS resumes the normal status, namely, the status of the OCS is not overloaded, the stored CDR is processed, the charge of each CDR is obtained, and the each CDR is rated and accounted. The system processes the CDRs in batches, and it is possible to select the number of CDRs to be processed in batches each time according to the current load of the OCS, thereby determining whether the CDRs should be processed rapidly or slowly.

Detailed explanation is made below to the process of generating the calling detailed record (CDR) of the user service (taking the user service as an ordinary voice call for example).

The online charging system OCS determines the message type of the received voice call. The message type is divided into three types, namely: initial message, update message and terminal message. A predetermined call duration is authorized, and when the actual call duration is not longer than the predetermined call duration, a calling detailed record corresponding to the actual call duration is generated; when the actual call duration is longer than the predetermined call duration, a calling detailed record corresponding to the predetermined call duration is generated, and the predetermined call duration is authorized again. The specific method is as follows: when the voice call is an initial message and this message requests for a call duration of 5 minutes, a call duration of 5 minutes is authorized by the OCS, a message is constructed according to normal online charging logic, and the message is returned to the external system, by which time no CDR is generated. At the same time, the memory records an identification of the call, and the call is identified as being charged offline. When the OCS receives an update message of the voice call, and when the update message reports that a call duration of 5 minutes has already been used and requests again for a call duration of 5 minutes, the OCS generates a CDR indicating that the call duration of 5 minutes has already been used, authorizes again a call duration of 5 minutes, constructs a message of successful processing just as the return message of online charging is constructed, and returns the message of successful processing to the external system. When the OCS receives a terminal message of the voice call, and when the terminal message reports that a call duration of 5 minutes has already been used, the OCS generates a CDR indicating that the call duration of 5 minutes has already been used, constructs a message of successful processing just as the return message of online charging is constructed, and returns the message of successful processing to the external system.

The service processing method provided by the embodiment of the present invention enables the online charging system (OCS) to process different user service requests by different charging processing modes according to corresponding user attributes and service attributes, and the online charging system (OCS) is capable of charging user services offline, to thereby enhance the service processing capability of the OCS. At the same time, since the aforementioned method is completed individually by the OCS without dependence upon any external system, operation is made convenient and resource occupancy of the external system is reduced. According to the service processing method provided by the embodiment of the present invention, the service processing capability of the OCS is enhanced without dependence upon any external system.

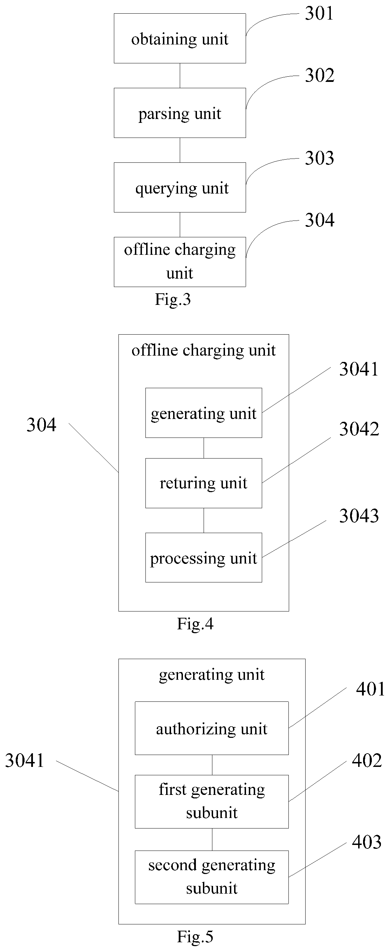

As shown in Fig. 3, an embodiment of the present invention further provides a service processing apparatus applied in an online charging system and service processing apparatus includes the following units.

An obtaining unit 301 is configured to obtain a user service request.

A parsing unit 302 is configured to parse the user service request obtain by the obtaining unit 301 when the online charging system is overloaded, and obtain a user attribute and a service attribute corresponding to the user service request, wherein the user attribute and the service attribute are preset.

In the embodiment of the present invention, the user attribute may be a high credit level user, a low credit level user or a medium credit level user, and the service attribute may be a high-value service, a low-value service or a medium-value service.

A querying unit 303 is configured to query a charging processing mode corresponding to the user attribute and the service attribute obtained by the parsing unit 302.

In the embodiment of the present invention, the charging processing mode corresponding to the user attribute and the service attribute can be queried according to a list of charging processing modes, and the list of charging processing modes can be flexibly configured by operators. The list of charging processing modes includes three parameters as a user attribute, a service attribute and a charging processing mode.

An offline charging unit 304 is configured to perform the offline charging via the online charging system for the user service when the charging processing mode obtained by the querying unit is offline charging.

In the embodiment of the present invention, the offline charging unit belongs to a part of a processing unit of the service processing apparatus, and the processing unit further includes an online charging unit and a denial charging unit respectively used for online charging processing and denying service processing.

Moreover, as shown in Fig. 4, the offline charging unit 304 includes: a generating unit 3041, configured to generate a detailed record of the user service; a returning unit 3042, configured to return a message of successful processing of the user service; and a processing unit 3043, configured to process the detailed record of the user service generated by the generating unit 3041, and obtain a corresponding service charge.

Furthermore, as shown in Fig. 5, the generating unit 3041 includes: an authorizing unit 401, configured to authorize a predetermined call duration for the user service request; a first generating subunit 402, configured to generate a calling detailed record corresponding to the actual call duration when an actual call duration is not longer than the predetermined call duration; and a second generating subunit 403, configured to generate a calling detailed record corresponding to the predetermined call duration when an actual call duration is longer than the predetermined call duration.

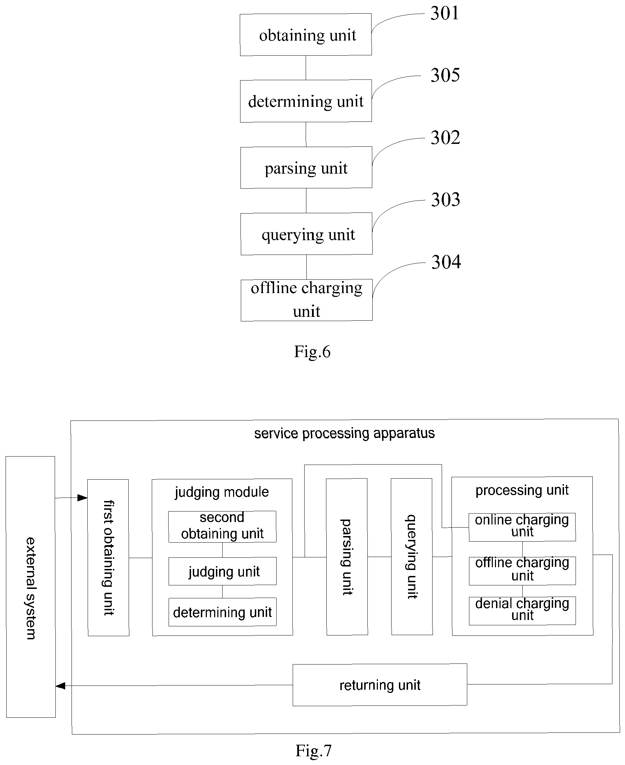

In addition, as shown in Fig. 6, the service processing apparatus provided by an embodiment of the present invention further includes:
a determining unit 305 configured to determine the current time is within a preset time period when the online charging system is not overloaded, and further notify the parsing unit 30 to parse the obtained user service request and to obtain a user attribute and a service attribute corresponding to the user service request, wherein the user attribute and the service attribute are preset. Moreover, the querying unit 303 is configured to query the charging processing mode corresponding to the user attribute and the service attribute obtained by the parsing unit 302, and the processing unit performs corresponding charging processing according to different charging processing modes.

Reference can be made to Steps 201-207 as shown in Fig. 2 for the specific implementation of the aforementioned service processing apparatus, while no repetition is made here.

Reference can be made to Fig. 7 for the connection relationship of the aforementioned service processing apparatus and its interaction relationship with external systems.

The service processing apparatus provided by the embodiment of the present invention enables the online charging system OCS to process different user service requests by different charging processing modes according to corresponding user attributes and service attributes, and the online charging system OCS is capable of charging user services offline, to thereby enhance the service processing capability of the OCS. At the same time, since the aforementioned method is completed individually by the OCS without dependence upon any external system, operation is made convenient and resource occupancy of the external system is reduced. According to the service processing apparatus provided by the embodiment of the present invention, the service processing capability of the OCS is enhanced without dependence upon any external system.

As should be explained, the division of various functional modules in the embodiment of the aforementioned service processing apparatus is described merely by way of examples, while in practical application, the above functions can be assigned to be completed by different functional modules on such demand as the configuration requirement of corresponding hardware or out of consideration to facilitate implementation of software. That is to say, the internal structure of the service processing apparatus is divided into different functional modules to complete the entire or partial functions described above. Moreover, in practical application, corresponding functional modules in the embodiments can be realized by corresponding hardware, and can also be realized by corresponding hardware that executes corresponding software. For instance, the aforementioned parsing unit 302 can be a hardware that executes the aforementioned functions, such as a parser having particular parsing capability, or a general receiving device capable of executing the aforementioned functions, a common receiving equipment capable of executing a corresponding computer program to realize the aforementioned functions, or any other hardware device.

The technical solutions provided by the present invention can be applied in the technical field in which services of mobile telephone users are processed when the online charging system is overloaded or during peak of user service requests.

As comprehensible to persons ordinarily skilled in the art, the entire or partial steps in the methods of the aforementioned embodiments can be executed by a program instructing relevant hardware, and the program can be stored in such a computer-readable storage medium as a ROM/RAM, a magnetic disk, or an optical disk, etc.

The above described embodiments are merely specific embodiments of the present invention, and the protection scope of the present invention is not limited thereto, as any modification or substitution easily conceivable to persons skilled in the art within the technical scope disclosed in the present invention shall be covered by the protection scope of the present invention. Therefore, the protection scope of the present invention should be the protection scope of the claims.

## Claims

1. A service processing method applied in an online charging system, comprising:
obtaining (101) a user service request;
determining (102) that the online charging system is overloaded, parsing the user service request, and obtaining a user attribute and a service attribute corresponding to the user service request, wherein the user attribute and the service attribute are preset;
querying (103) a charging processing mode corresponding to the user attribute and the service attribute; and
determining (104) the charging processing mode as offline charging, and performing an offline charging by the online charging system for the user service request.

2. The service processing method according to claim 1, wherein the step of performing the offline charging by the online charging system for the user service request comprises:
generating a detailed record of user service;
returning a message of successful processing of the user service; and
processing the detailed record of the user service, and obtaining a corresponding service charge.

3. The service processing method according to claim 2, when the user service is a voice call, wherein the step of generating a detailed record of user service comprises:
authorizing the user to request for a predetermined call duration; and
generating a calling detailed record corresponding to the actual call duration when an actual call duration is not longer than the predetermined call duration.

4. The service processing method according to claim 2, when the user service is a voice call, wherein the step of generating a detailed record of user service comprises:
authorizing the user to request for a predetermined call duration; and
generating a calling detailed record corresponding to the predetermined call duration, and authorizing again the predetermined call duration when an actual call duration is longer than the predetermined call duration.

5. The service processing method according to claim 1, further comprising, when it is determined that the online charging system is not overloaded:
determining the current time is within a preset time period, parsing the user service request, obtaining the user attribute and the service attribute corresponding to the user service request, and querying a charging processing mode corresponding to the user attribute and the service attribute, wherein the user attribute and the service attribute are preset; and
performing corresponding charging processing according to the queried charging processing mode.

6. The service processing method according to claim 1, wherein the charging processing mode further comprises:
online charging or denying charging processing.

7. A service processing apparatus configured to be applied in an online charging system, comprising:
an obtaining unit (301), configured to obtain a user service request;
a unit configured to determine whether the online charging system is overloaded or not;
a parsing unit (302), configured to parse the user service request obtained by the obtaining unit when the online charging system is overloaded, and obtain a user attribute and a service attribute corresponding to the user service request, wherein the user attribute and the service attribute are preset;
a querying unit (303), configured to query a charging processing mode corresponding to the user attribute and the service attribute obtained by the parsing unit; and
an offline charging unit (304), configured to perform an offline charging via the online charging system for user service when the charging processing mode obtained by the querying unit is offline charging.

8. The service processing apparatus according to claim 7, wherein the offline charging unit (304) comprises:
a generating unit (3041), configured to generate a detailed record of the user service;
a returning unit (3042), configured to return a message of successful processing of the user service; and
a processing unit (3043), configured to process the detailed record of the user service generated by the generating unit, and obtaining a corresponding service charge.

9. The service processing apparatus according to claim 8, wherein the generating unit (3041) comprises:
an authorizing unit (401), configured to authorize the user to request for a predetermined call duration;
a first generating subunit (402), configured to generate a calling detailed record corresponding to the actual call duration when an actual call duration is not longer than the predetermined call duration; and
a second generating subunit (403), configured to generate a calling detailed record corresponding to the predetermined call duration when an actual call duration is longer than the predetermined call duration.

10. The service processing apparatus according to claim 7, **characterized in** further comprising:
a determining unit (305), configured to determine the current time is within a preset time period when the online charging system is not overloaded.

## Patentansprüche

1. Dienstverarbeitungsverfahren, das in einem Online-Abrechnungssystem angewendet wird und Folgendes umfasst:
Erhalten (101) einer Anwenderdienstanforderung;
Bestimmen (102), dass das Online-Abrechnungssystem überlastet ist, "Parsen" der Anwenderdienstanforderung und Erhalten eines Anwenderattributs und eines Dienstattributs, die der Anwenderdienstanforderung entsprechen, wobei das Anwenderattribut und das Dienstattribut voreingestellt sind;
Abfragen (103) eines Abrechnungsverarbeitungsmodus, der dem Anwenderattribut und dem Dienstattribut entspricht; und
Bestimmen (104) des Abrechnungsverarbeitungsmodus als Offline-Abrechnung und Durchführen einer Offline-Abrechnung durch das Online-Abrechnungssystem für die Anwenderdienstanforderung.

2. Dienstverarbeitungsverfahren nach Anspruch 1, wobei der Schritt des Durchführens der Offline-Abrechnung durch das Online-Abrechnungssystem für die Anwenderdienstanforderung Folgendes umfasst:
Erzeugen einer detaillierten Aufstellung des Anwenderdienstes;
Zurückgeben einer Meldung einer erfolgreichen Verarbeitung des Anwenderdienstes; und
Verarbeiten der detaillierten Aufstellung des Anwenderdienstes und Erhalten einer entsprechenden Dienstgebühr.

3. Dienstverarbeitungsverfahren nach Anspruch 2, wenn der Anwenderdienst ein Sprachanruf ist, wobei der Schritt des Erzeugens einer detaillierten Aufstellung des Anwenderdienstes Folgendes umfasst:
Autorisieren, dass der Anwender eine vorbestimmte Anrufdauer anfordert; und
Erzeugen einer detaillierten Anrufaufstellung, die der tatsächlichen Anrufdauer entspricht, wenn eine tatsächliche Anrufdauer nicht länger als die vorbestimmte Anrufdauer ist.

4. Dienstverarbeitungsverfahren nach Anspruch 2, wenn der Anwenderdienst ein Sprachanruf ist, wobei der Schritt des Erzeugens einer detaillierten Aufstellung des Anwenderdienstes Folgendes umfasst:
Autorisieren, dass der Anwender eine vorbestimmte Anrufdauer anfordert; und
Erzeugen einer detaillierten Anrufaufstellung, die der vorbestimmten Anrufdauer entspricht, und erneutes Autorisieren der vorbestimmten Anrufdauer, wenn eine tatsächliche Anrufdauer länger als die vorbestimmte Anrufdauer ist.

5. Dienstverarbeitungsverfahren nach Anspruch 1, das, wenn bestimmt wird, dass das Online-Abrechnungssystem nicht überlastet ist, ferner Folgendes umfasst:
Bestimmen, dass die aktuelle Zeit innerhalb einer voreingestellten Zeitspanne liegt, "Parsen" der Anwenderdienstanforderung, Erhalten des Anwenderattributs und des Dienstattributs, die der Anwenderdienstanforderung entsprechen, und Abfragen eines Abrechnungsverarbeitungsmodus, der dem Anwenderattribut und dem Dienstattribut entspricht, wobei das Anwenderattribut und das Dienstattribut voreingestellt sind; und
Durchführen einer entsprechenden Abrechnungsverarbeitung gemäß dem abgefragten Abrechnungsverarbeitungsmodus.

6. Dienstverarbeitungsverfahren nach Anspruch 1, wobei der Abrechnungsverarbeitungsmodus ferner Folgendes umfasst:
Online-Abrechnen oder Verweigern einer Abrechnungsverarbeitung.

7. Dienstverarbeitungsvorrichtung, die dazu ausgelegt ist, in einem Online-Abrechnungssystem angewendet zu werden, und Folgendes umfasst:
eine Empfangseinheit (301), die dazu ausgelegt ist, eine Anwenderdienstanforderung zu erhalten;
eine Einheit, die dazu ausgelegt ist, zu bestimmen, ob das Online-Abrechnungssystem überlastet ist oder nicht;
eine "Parsing"-Einheit (302), die dazu ausgelegt ist, die Anwenderdienstanforderung, die durch die Empfangseinheit erhalten wird, zu "parsen", wenn das Online-Abrechnungssystem überlastet ist, und ein Anwenderattribut und ein Dienstattribut, die der Anwenderdienstanforderung entsprechen, zu erhalten, wobei das Anwenderattribut und das Dienstattribut voreingestellt sind;
eine Abfrageeinheit (303), die dazu ausgelegt ist, einen Abrechnungsverarbeitungsmodus abzufragen, der dem Anwenderattribut und dem Dienstattribut entspricht, die durch die "Parsing"-Einheit erhalten werden; und
eine Offline-Abrechnungseinheit (304), die dazu ausgelegt ist, eine Offline-Abrechnung für einen Anwenderdienst über das Online-Abrechnungssystem durchzuführen, wenn der Abrechnungsverarbeitungsmodus, der durch die Abfrageeinheit erhalten wird, eine Offline-Abrechnung ist.

8. Dienstverarbeitungsvorrichtung nach Anspruch 7, wobei die Offline-Abrechnungseinheit (304) Folgendes umfasst:
eine Erzeugungseinheit (3041), die dazu ausgelegt ist, eine detaillierte Aufstellung des Anwenderdienstes zu erzeugen;
eine Rückgabeeinheit (3042), die dazu ausgelegt ist, eine Meldung einer erfolgreichen Verarbeitung des Anwenderdienstes zurückzugeben;
und
eine Verarbeitungseinheit (3043), die dazu ausgelegt ist, die detaillierte Aufstellung des Anwenderdienstes, der durch die Erzeugungseinheit erzeugt wird, zu verarbeiten und eine entsprechende Dienstgebühr zu erhalten.

9. Dienstverarbeitungsvorrichtung nach Anspruch 8, wobei die Erzeugungseinheit (3041) Folgendes umfasst:
eine Autorisierungseinheit (401), die dazu ausgelegt ist, den Anwender zu autorisieren, eine vorbestimmte Anrufdauer anzufordern;
eine erste Erzeugungsuntereinheit (402), die dazu ausgelegt ist, eine detaillierte Anrufaufstellung, die der tatsächlichen Anrufdauer entspricht, zu erzeugen, wenn eine tatsächliche Anrufdauer nicht länger als die vorbestimmte Anrufdauer ist; und
eine zweite Erzeugungsuntereinheit (403), die dazu ausgelegt ist, eine detaillierte Anrufaufstellung, die der vorbestimmten Anrufdauer entspricht, zu erzeugen, wenn eine tatsächliche Anrufdauer länger als die vorbestimmte Anrufdauer ist.

10. Dienstverarbeitungsvorrichtung nach Anspruch 7, **dadurch gekennzeichnet, dass** sie ferner Folgendes umfasst:
eine Bestimmungseinheit (305), die dazu ausgelegt ist, zu bestimmen, dass die aktuelle Zeit innerhalb einer voreingestellten Zeitspanne liegt, wenn das Online-Abrechnungssystem nicht überlastet ist.

## Revendications

1. Procédé de traitement de service appliqué dans un système de facturation en ligne, comprenant :
l'obtention (101) d'une requête de service d'utilisateur ;
la détermination (102) que le système de facturation en ligne est surchargé, l'analyse syntaxique de la requête de service d'utilisateur, et l'obtention d'un attribut d'utilisateur et d'un attribut de service correspondant à la requête de service d'utilisateur, dans lequel l'attribut d'utilisateur et l'attribut de service sont prédéfinis ;
l'interrogation (103) d'un mode de traitement de facturation correspondant à l'attribut d'utilisateur et à l'attribut de service ; et
la détermination (104) du mode de traitement de facturation en tant que facturation en différé, et l'exécution d'une facturation en différé par le système de facturation en ligne pour la requête de service d'utilisateur.

2. Procédé de traitement de service selon la revendication 1, dans lequel l'étape d'exécution de la facturation en différé par le système de facturation en ligne pour la requête de service d'utilisateur comprend :
la génération d'un enregistrement détaillé du service d'utilisateur ;
le renvoi d'un message de traitement réussi du service d'utilisateur ; et
le traitement de l'enregistrement détaillé du service utilisateur, et l'obtention d'un coût de service correspondant.

3. Procédé de traitement de service selon la revendication 2, dans lequel le service d'utilisateur est un appel vocal, dans lequel l'étape de génération d'un enregistrement détaillé du service d'utilisateur comprend :
l'autorisation de l'utilisateur à demander une durée d'appel prédéterminée ; et
la génération d'un enregistrement détaillé d'appel correspondant à la durée d'appel effective quand une durée d'appel effective est plus courte que la durée d'appel prédéterminée.

4. Procédé de traitement de service selon la revendication 2, dans lequel le service d'utilisateur est un appel vocal, dans lequel l'étape de génération d'un enregistrement détaillé du service d'utilisateur comprend :
l'autorisation de l'utilisateur à demander une durée d'appel prédéterminée ; et
la génération d'un enregistrement détaillé d'appel correspondant à la durée d'appel prédéterminée, et l'autorisation à nouveau de la durée d'appel prédéterminée quand une durée d'appel effective est plus longue que la durée d'appel prédéterminée.

5. Procédé de traitement de service selon la revendication 1, comprenant en outre, quand il est déterminé que le système de facturation en ligne n'est pas surchargé :
la détermination que le temps actuel est compris dans une période de temps prédéfinie, l'analyse syntaxique de la requête de service d'utilisateur, l'obtention de l'attribut d'utilisateur et de l'attribut de service correspondant à la requête de service d'utilisateur, et l'interrogation d'un mode de traitement de facturation correspondant à l'attribut d'utilisateur et à l'attribut de service, dans lequel l'attribut d'utilisateur et l'attribut de service sont prédéfinis ; et
l'exécution d'un traitement de facturation correspondant en fonction du mode de traitement de facturation interrogé.

6. Procédé de traitement de service dans la revendication 1, dans lequel le mode de traitement de facturation comprend en outre :
la facturation en ligne ou le refus du traitement de facturation.

7. Appareil de traitement de service configuré pour être appliqué dans un système de facturation en ligne, comprenant :
une unité d'obtention (301) configurée pour obtenir une requête de service d'utilisateur ;
une unité configurée pour déterminer que le système de facturation en ligne est surchargé ou non ;
une unité d'analyse syntaxique (302), configurée pour analyser syntaxiquement la requête de service d'utilisateur obtenue par l'unité d'obtention quand le système de facturation en ligne est surchargé, et obtenir un attribut d'utilisateur et un attribut de service correspondant à la requête de service d'utilisateur, dans lequel l'attribut d'utilisateur et l'attribut de service sont prédéfinis ;
une unité d'interrogation (303), configurée pour interroger un mode de traitement de facturation correspondant à l'attribut d'utilisateur et à l'attribut de service obtenu par l'unité d'analyse syntaxique ; et
une unité de facturation en différé (304), configurée pour exécuter une facturation en différé par l'intermédiaire du système de facturation en ligne du service d'utilisateur quand le mode de traitement de facturation obtenu par l'unité d'interrogation est une facturation en différé.

8. Appareil de traitement de service selon la revendication 7, dans lequel l'unité de facturation en différé (304) comprend :
une unité de génération (3041), configurée pour générer un enregistrement détaillé du service d'utilisateur ;
une unité de renvoi (3042), configurée pour renvoyer un message de traitement réussi du service d'utilisateur ; et
une unité de traitement (3043), configurée pour traiter l'enregistrement détaillé du service utilisateur généré par l'unité de génération, et obtenir un coût de service correspondant.

9. Appareil de traitement de service selon la revendication 8, dans lequel l'unité de génération (3041) comprend :
une unité d'autorisation (401), configurée pour autoriser l'utilisateur à demander une durée d'appel prédéterminée ;
une première sous-unité de génération (402), configurée pour générer un enregistrement détaillé d'appel correspondant à la durée d'appel effective quand une durée d'appel effective est plus courte que la durée d'appel prédéterminée ; et
une seconde sous-unité de génération (403), configurée pour générer un enregistrement détaillé d'appel correspondant à la durée d'appel prédéterminée quand une durée d'appel effective est plus longue que la durée d'appel prédéterminée.

10. Appareil de traitement de service selon la revendication 7, **caractérisé en ce qu'**il comprend en outre :
une unité de détermination (305), configurée pour déterminer que le temps actuel est compris dans une période de temps prédéfinie quand le système de facturation en ligne n'est pas surchargé.
